# EUROPEAN PATENT SPECIFICATION

(11) **EP 3 736 248 B1**
(45) Date of publication and mention of the grant of the patent: **28.01.2026**
(21) Application number: 18898737.4
(22) Date of filing: 30.11.2018
(51) Int. Cl.: B67D 1/04

(54) **LIQUID SALES MANAGEMENT SYSTEM**
FLÜSSIGKEITSVERKAUFSVERWALTUNGSSYSTEM
SYSTÈME DE GESTION DE VENTES DE LIQUIDE

(30) Priority: 04.01.2018 JP 2018000044
(43) Date of publication of application: 11.11.2020
(73) Proprietor: Asahi Group Holdings, Ltd., Tokyo 130-8602 (JP); Asahi Breweries, Ltd., Tokyo 130-8602 (JP)
(72) Inventor: YAMASHITA, Naoyuki, Moriya-shi, Ibaraki 302-0106 (JP); KITANO, Junichi, Moriya-shi, Ibaraki 302-0106 (JP); WADA, Takashi, Kobe-shi, Hyogo 650-0022 (JP); KUSUNOKI, Kenji, Kobe-shi, Hyogo 650-0022 (JP)
(74) Representative: Müller-Boré & Partner Patentanwälte PartG mbB
(86) International application number: PCT/JP2018/044275
(87) International publication number: WO 2019/135332

(56) References cited:
- WO-A1-2011/000021
- JP-A- 2003 192 096
- JP-A- 2003 192 096
- JP-A- 2003 303 372
- JP-A- 2009 067 448
- US-A1- 2005 194 399
- US-A1- 2007 220 126

## Description

### TECHNICAL FIELD

The present invention relates to a liquid sales management system that manages sales of a liquid in a liquid supply system.

### BACKGROUND ART

In a restaurant, a liquid supply system is generally used as a device for providing a liquid, for example, beer. When the beer is used as an example, the liquid supply system includes a carbon dioxide gas cylinder, a beer barrel filled with beer, a supply pipe, and a beer dispenser. The liquid supply system pressurizes the beer within the beer barrel with a carbon dioxide gas of the carbon dioxide gas cylinder, and transfers the liquid with pressurization from the supply pipe to the beer dispenser. The beer dispenser has a beer cooling pipe provided within a cooling tank, a refrigeration machine, and a dispensing outlet. The beer dispenser freezes a part of a cooling water within the cooling tank by the refrigeration machine, cools the beer while causing the beer to flow within the beer cooling pipe by a lever operation at the dispensing outlet, and dispenses the beer to a drinking container such as a beer mug. In this manner, the beer within the beer barrel is provided to a customer.

Many restaurants adopt a so-called point of sales system (POS) system as a system for managing sales information. The POS system is a system that acquires and transmits the sales information and the like when, for example, a customer pays a fee. Thus, for example, the sales amount of beer can be recorded together with time information of month, day, hour, and minute by using the POS system.

### PRIOR ART DOCUMENTS

### PATENT DOCUMENTS

Patent Document 1: JP 2001-229466 A
Patent Document 2: JP 5963587 B
Patent Document 3: US 2007/220126 A1
Patent Document 4: JP 2003-192096 A
Patent Document 5: WO 2011/000021 A1

### SUMMARY OF THE INVENTION

### PROBLEMS TO BE SOLVED BY THE INVENTION

It is possible to manage sales information on an account book, in other words, nominal or apparent sales information by using the POS system as described above. That is, for example, information indicating that two medium beer mugs of beer are sold at 20:00 can be recorded. Here, when a prescribed capacity, that is,volume, of one medium beer mug is decided to be 300 ml, 600 ml of beer is consumed at the aforementioned time on the sales information in the POS system. However, for example, if a staff in the restaurant spills the beer while pouring the beer into the first beer mug, for example, 330 ml of beer is actually consumed, and 630 ml of beer is actually consumed.

As described above, the fact is that the apparent sales information in the POS system may not match up with the actual consumption.

However, heretofore, the sales management of the liquid is not performed by focusing on the difference between the sales information in the POS system and the actual consumption.

Patent Document 1 discloses that the remaining amount of a drink is managed by using a POS system in a restaurant, and Patent Document 1 fails to teach the content of comparing apparent information with actual information.
Patent Document 2 discloses that state information of beverage is transmitted from a transmission device to a communication line, and is monitored by an external computer. So, Patent Document 2 also fails to teach the content of comparing apparent information and actual information.
Patent Document 3 discloses distributed intelligent systems and methods therefor.
Patent Document 4 discloses a remote monitoring system for a drink pouring unit and a drink pouring unit that can be monitored remotely.
Patent Document 5 discloses an apparatus and a method for managing dispensing of beverages according to the preamble of claims 1 and 5.

The present invention has been made in order to solve such problems, and an object of the present invention is to provide a liquid sales management system that performs sales management of a liquid by focusing on a difference between sales information and an actual liquid consumption.

### MEANS FOR SOLVING THE PROBLEMS

To achieve the aforementioned object, the present invention has a configuration to be described below.

A liquid sales management system according to a first embodiment of the present invention is a system comprising a liquid supply system configured to be installed in a store, a sales information management system configured to be installed in the store, and a management server configured to perform communication with the liquid supply system and the sales information management system via a communication line,
the liquid supply system including:
a dispensing device configured such that a liquid within a storage container is supplied with pressurization through a supply pipe, configured to cool and dispense the liquid to a drinking container;
an actual flow rate determination part having a flow rate sensor for detecting an amount of the liquid dispensed into the drinking container and configured to determine an actual flow rate of the liquid dispensed into the drinking container from the dispensing device based on a detection signal of the flow rate sensor; and
a transmission and reception part configured to communicate with the communication line,
the sales information management system being configured to send sales information of the liquid to the communication line, the sales information being information with which pieces of information of a sales unit volume corresponding to a prescribed volume per one sale, the number of sales, and a sales time are associated, and
the management server including a consumption analysis part configured to determine a difference between an apparent liquid amount determined from the sales information and the actual flow rate, the difference corresponding to a non-sales amount of the liquid which is not involved in sales,
characterized in that the management server further includes an overtime consumption acquisition part configured to determine an amount of liquid from the storage container consumed after the sales time is ended, as an overtime consumption.

A liquid sales management system according to a second embodiment of the present invention is a system comprising a liquid supply system configured to be installed in a store, a sales information management system configured to be installed in the store, and a management server configured to perform communication via a communication line and to store information from the liquid supply system and the sales information management system,
the sales information management system being configured to send sales information of the liquid to the communication line, the sales information being information with which pieces of information of a sales unit volume corresponding to a prescribed volume per one sale, the number of sales, and a sales time are associated,
the liquid supply system including:
   a dispensing device configured such that a liquid within a storage container is supplied with pressurization through a supply pipe, configured to cool and dispense the liquid to a drinking container;
   an actual flow rate determination part having a flow rate sensor for detecting an amount of the liquid dispensed into the drinking container and configured to determine an actual flow rate of the liquid dispensed into the drinking container from the dispensing device based on a detection signal of the flow rate sensor;
   a transmission and reception part configured to communicate with the communication line, and
   a consumption analysis part configured to determine a difference between an apparent liquid amount determined from the sales information obtained from the management server and the actual flow rate, the difference corresponding to a non-sales amount of the liquid which is not involved in sales,
   characterized in that the liquid supply system further includes an overtime consumption acquisition part configured to determine an amount of liquid from the storage container consumed after the sales time is ended, as an overtime consumption.

### EFFECTS OF THE INVENTION

When the management server communicating with the liquid supply system and the liquid sales management system includes the consumption analysis part, the management server can recognize the difference between the sales information and the actual liquid consumption. As a result, for example, it is possible to compare the actual dispensed amount with respect to the prescribed capacity of one drinking container, and it is possible, for example, to ascertain the non-sale amount of the liquid in one business day.

### BRIEF DESCRIPTION OF THE DRAWINGS

Fig. 1 is a block diagram illustrating a basic configuration of a liquid sales management system according to the first embodiment of the present invention.
Fig. 2 is a block diagram illustrating a detailed configuration of a consumption analysis part illustrated in Fig. 1.
Fig. 3 is a block diagram illustrating a configuration of a liquid sales management system according to the second embodiment of the present invention.
Fig. 4A is a perspective view illustrating a detection part included in a fluid flow path adjustment device provided in the liquid sales management system illustrated in Fig. 3.
Fig. 4B is a diagram illustrating a schematic configuration of the fluid flow path adjustment device illustrated in Fig. 4A.
Fig. 4C is a diagram for describing a schematic configuration and operation of a fluid stopper device included in the fluid flow path adjustment device illustrated in Fig. 4A.
Fig. 4D is a diagram for describing a schematic configuration and operation of the fluid stopper device included in the fluid flow path adjustment device illustrated in Fig. 4A.

### EMBODIMENTS OF THE INVENTION

The liquid sales management system according to the present invention will be described below with reference to the drawings. In the drawings, the same or similar components are denoted by the same reference symbols. In order to avoid the following description from being unnecessarily redundant and to facilitate the understanding of those skilled in the art, detailed description of well-known matters and redundant description of substantially the same configuration may be omitted. The following description and the contents of the accompanying drawings are not intended to limit the subject matter described in the appended claims. That is, the scope of the present invention is only limited by the appended claims.

The liquid sales management system according to each of the first embodiment and the second embodiment to be described below includes a liquid supply system configured to be installed in a store such as a restaurant, a sales information management system configured to be installed in the store, and a management server configured to perform information communication with the liquid supply system and the sales information management system via a communication line.

In the following, beer is used as an example of a liquid to be handled, but the liquid is not limited to beer. Alcohol drinks such as low-malt beer, liqueur, shochu highball, whiskey, and wine, drinking water, soft drinks, and carbonated drinks may be used.

### First Embodiment

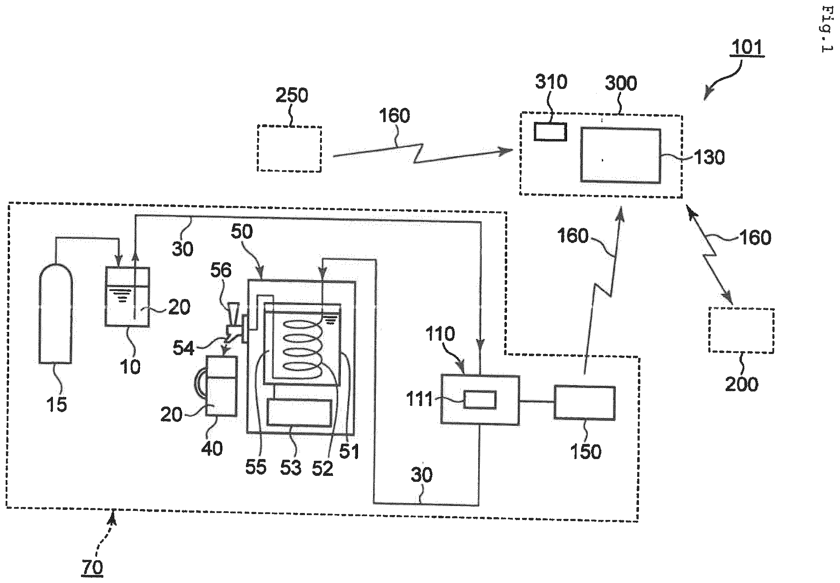

A liquid sales management system 101 according to the first embodiment as illustrated in Fig. 1 will be described. The liquid sales management system 101 includes a liquid supply system 70, a sales information management system 250, and a management server 300 as described above, and is configured such that the management server 300 has a consumption analysis part 130 that determines a difference between sales information and an actual flow rate of a liquid 20, as will be described in detail below.

First, the liquid supply system 70 will be described.

As illustrated in Fig. 1, in the first embodiment, the liquid supply system 70 has a configuration in which an actual flow rate determination part 110 having a flow rate sensor 111 and a transmission and reception part 150 are further added to an existing basic component part including a storage container 10, a pressurization source 15, a supply pipe 30, and a dispensing device 50.

The basic component part is a system that supplies, that is, transfers the liquid (for example, beer) 20 within the storage container 10 to the dispensing device 50 through the supply pipe 30 with pressurization by using the pressurization source 15 and dispenses the liquid from the dispensing device 50 to a drinking container (for example, a beer mug) 40. Without being limited thereto, the storage container 10 is a stainless steel container called a beer barrel filled with beer in a beer manufacturer, and has a capacity of, for example, 5 liters, 10 liters, or 19 liters. The pressurization source 15 is a carbon dioxide gas cylinder. The supply pipe 30 is a flexible resin tube made of, for example, polyamide, polyurethane, or polyester which enables beer to flow between the storage container 10 and the dispensing device 50. As will be described below, a device included in the liquid sales management system 101 is attached to the supply pipe 30. It is preferable that inner diameters of flow passages of a fluid from the supply pipe 30 to a liquid dispensing outlet 54 in the dispensing device 50 are designed to have the same dimension such that a cleaning with a sponge becomes easy.

Without being limited thereto, a beer dispenser (may be referred to as a "beer server") will be described as an example of the dispensing device 50 (hereinafter, may be accordingly referred to as the beer dispenser 50). As already described above, the beer dispenser 50 includes a liquid cooling pipe (beer cooling pipe) 52 disposed inside a cooling tank 51, a refrigeration machine 53, and the liquid dispensing outlet 54. The beer dispenser freezes a part of a cooling water 55 within the cooling tank 51 by using the refrigeration machine 53, and cools the liquid (beer) 20 passing through the beer cooling pipe 52 by using the cooling water 55. The beer 20 transferred by the pressurization source 15 passes through the beer cooling pipe 52 by operating a lever 56 at the dispensing outlet 54 while being cooled by heat exchange with the cooling pipe, is dispensed into the drinking container 40 such as the beer mug, and is provided to a customer.

The beer dispenser 50 is generally used in an environment in which an external air temperature is equal to or higher than 5°C and is equal to or lower than 40°C. The liquid handled by the dispensing device 50 is not limited to the beer, and may be a drinking water. The beer dispenser 50 cools the beer as a target liquid, but the dispensing device 50 included herein may also heat the target liquid or keep the target liquid warm.

In addition to the basic component part, the actual flow rate determination part 110 which is an additional component has the flow rate sensor 111 that detects the amount of liquid dispensed into the drinking container 40, and the actual flow rate determination part determines an actual flow rate of the liquid (beer) 20 dispensed into the drinking container 40 from the dispensing device 50 based on a detection signal of the flow rate sensor 111.

Without being limited thereto, the flow rate sensor 111 is installed at an appropriate position between an outlet of the storage container 10 and the beer dispenser 50 so as to sandwich the beer passing through the supply pipe 30. The installation position is not limited thereto, and the flow rate sensor may be attached to, for example, the supply pipe 30 of the dispensing device 50. Further, and without being limited thereto, an ultrasonic sensor is used as the flow rate sensor 111. The actual flow rate determination part 110 having such a flow rate sensor 111 determines the actual flow rate of the liquid (beer) actually dispensed into the drinking container 40 based on the signal obtained from the flow rate sensor 111.

The transmission and reception part 150 which is also the additional component is electrically connected to the actual flow rate determination part 110. So, the transmission and reception part 150 can transmit the actual flow rate of the liquid 20 actually dispensed from the dispensing device 50 to the drinking container 40, that is, information on the actual consumption of the liquid 20 to the communication line 160, and can supply it to the management server 300. The transmission and reception part 150 can also receive information from the communication line 160.

Next, the sales information management system 250 will be described.

The sales information management system 250 is a system corresponding to a point of sales system (POS) system adopted in the store such as the restaurant. Here, the sales information management system 250 is the same as the system already described, and acquires sales information and the like, for example, at a time of a customer's payment, and supplies those to the management server 300 via the communication line 160. Here, the sales information of the liquid 20 corresponds to information with which pieces of information of a sales unit capacity that is a prescribed capacity per one sale, the number of sales, a sales time, and the like are associated. Here, the aforementioned "prescribed capacity per one sale", that is, the "sales unit capacity" corresponds to, for example, a capacity of one cup which is determined with respect to the drinking container 40 in each size. For example, it corresponds to a value of 300 ml in the case of a medium beer mug, a value of 500 ml in the case of a large beer mug, and the like. The "sales unit capacity" can be set by any of an input from the sales information management system 250, an input to the consumption analysis part 130 in the management server 300, and an input to an analysis device 200 to be described below, and can also be set for each of multiple types or volumes of drinking containers 40.

It is possible to record, for example, the sales amount of the liquid (beer) 20 together with time information of month, day, hour, and minute by using such a sales information management system 250. The acquisition of the sales information into the sales information management system 250 is not limited to at the time of payment, and may be at a time of inputting an order to a terminal carried by a store staff, or the like.

Next, the management server 300 will be described.

The management server 300 is constituted by a computer connected to the communication line 160, and corresponds to so-called cloud computing. Without being limited thereto, the management server 300 includes a storage part 310 that stores information supplied from the liquid supply system 70 and the sales information management system 250, and the consumption analysis part 130.

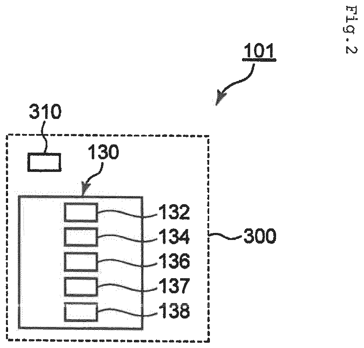

The consumption analysis part 130 in the management server 300 will be described below in detail with reference to Fig. 2.

The consumption analysis part 130 determines a difference between an apparent liquid amount of the liquid 20 obtained from the sales information supplied from the sales information management system 250 and the actual flow rate of the liquid 20 supplied from the actual flow rate determination part 110 in the liquid supply system 70. Here, the "apparent liquid amount" corresponds to an apparent consumption of the liquid 20 that is not an actual value and is included in the sales information supplied from the sales information management system 250. Such an apparent liquid amount can be obtained by, for example, multiplying the sales unit capacity and the number of sales included in the sales information. Also, the apparent liquid amount corresponds to an apparent liquid amount, for example, during a time when the time information is identical or substantially identical, a set time, or a period such as one business day, each of which is included in the sales information.

Without being limited thereto, the consumption analysis part 130 includes an apparent liquid amount acquisition part 137 that determines the apparent liquid amount, and a difference acquisition part 138 that determines a difference between the apparent liquid amount and the actual flow rate. However, the present invention is not limited thereto, and for example, a value obtained from the sales information management system 250 may be used as the apparent liquid amount.

Regarding the actual flow rate supplied from the actual flow rate determination part 110 in the liquid supply system 70, the consumption analysis part 130 also determines the actual flow rate during the same period as the period during which the apparent liquid amount is determined, such as the set time, or one business day.

Further, the consumption analysis part 130 compares the obtained apparent liquid amount with the actual flow rate, and determines the difference therebetween. Usually, the actual flow rate tends to be larger than the apparent liquid amount. Thus, the amount of the liquid 20 corresponding to the obtained difference can be regarded as a non-sale amount of the liquid 20 which is not involved in the sales. Accordingly, reducing the non-sale amount is one of the important matters for each store in order to improve profit.

As described above, the time information along with the sales information is also supplied from the sales information management system 250 to the consumption analysis part 130 in the management server 300. However, since the consumption analysis part 130 requires the time information as described above, the consumption analysis part 130 can include a time information generation part 132. Here, the time information generation part 132 generates time information for the month, day, hour, and minute. Business hours information can be input to the consumption analysis part 130, and the business hours information can be registered from the analysis device 200 that can perform information communication with the management server 300 via the communication line 160 and is provided in, for example, a manufacturing company (beer manufacturer) of the liquid 20.

As described above, for example, a unit capacity error corresponding to the difference between the sales unit capacity of 300 ml, which is an example of a medium beer mug, and the actual flow rate of the liquid 20 actually dispensed into the single drinking container 40 is one of matters that cannot be overlooked. That is, when the unit capacity error is larger on a plus side, since a capacity exceeding the prescribed capacity is provided to the customer, a loss on the store side is caused. Conversely, in a case where the unit capacity error is larger on a minus side, a loss on the customer side is caused. In the case of the beer, even though the beer mug is filled with beer, the difference between the sales unit capacity and the actual flow rate may be caused by depending on a ratio of the liquid and foam. So, also depending on how the beer is poured, the unit capacity error may occur.

Thus, the consumption analysis part 130 can include a unit capacity error acquisition part 134 as illustrated in Fig. 2. The unit capacity error acquisition part 134 determines an error between the sales unit capacity and the actual flow rate per one cup in the same period as the period, such as the set time, one business day, in which the apparent liquid amount is determined. Here, as for the actual flow rate per one cup, it is assumed that a flow rate during a continuous detection operation of the flow rate sensor 111 for one cup is set as the actual flow rate per one cup.

Further, from the viewpoint of hygiene management and quality control of the liquid (beer) 20, cleaning with water is usually performed within a pipeline from the outlet of the storage container 10 to the dispensing outlet 54 of the dispensing device 50 after the closing of business. Discarded amount and filled amount of the liquid 20 corresponding to a volume within the pipeline used according to this cleaning operation also become the non-sale amount.

Thus, according to the present invention, the consumption analysis part 130 includes an overtime consumption acquisition part 136 as illustrated in Fig. 2. The overtime consumption acquisition part 136 determines an overtime consumption of the liquid 20 after the closing of the business with reference to the time information from the time information generation part 132 based on the actual flow rate obtained from the actual flow rate determination part 110.

The consumption analysis part 130 configured as above is realized by using a computer constituting the management server 300, the computer being configured with software for executing each of the aforementioned functions such as the apparent liquid amount acquisition part 137, the difference acquisition part 138, the time information generation part 132, the unit capacity error acquisition part 134, and the overtime consumption acquisition part 136; and a hardware such as a central processing unit (CPU) for executing the software and a memory (storage part 310).

The liquid sales management system 101 according to the first embodiment having the configuration described above operates as follows.

In the liquid supply system 70, the store staff operates the lever 56 of the dispensing device (beer dispenser) 50, and thus, the liquid (beer) 20 is dispensed into the drinking container 40. The dispensed amount is measured by the actual flow rate determination part 110, and is supplied as the actual flow rate from the transmission and reception part 150 to the consumption analysis part 130 of the management server 300 via the communication line 160.

The sales information with which pieces of information of the sales unit capacity, the number of sales, and the sales time are associated is also supplied to the management server 300 from the sales information management system 250.

In the first embodiment already described, the consumption analysis part 130 in the management server 300 determines the apparent liquid amount of the liquid 20 from the sales information supplied from the sales information management system 250, and further determines the difference between the actual flow rate of the liquid 20 supplied from the actual flow rate determination part 110 in the liquid supply system 70 and the apparent liquid amount.

The unit capacity error acquisition part 134 of the consumption analysis part 130 in the management server 300 determines the unit capacity error between the sales unit capacity and the actual flow rate.

Furthermore, after the closing of the business, the overtime consumption acquisition part 136 of the consumption analysis part 130 in the management server 300 determines the overtime consumption of the liquid 20 based on the actual flow rate from the actual flow rate determination part 110.

Then, the consumption analysis part 130 can send the information on the obtained difference, the unit capacity error, and the overtime consumption together with the time information to such as the analysis device 200 (computer) on the manufacturing company (beer manufacturer) via the communication line 160.

In accordance with the liquid sales management system 101 including the management server 300 that performs the operation described above, the following effects can be obtained.

That is, first, it is possible to perform the sales management of the liquid 20 in the management server 300 by focusing on the difference between the apparent liquid amount and the actual consumption of the liquid 20, and it is possible to perform the sales management of the liquid 20 in the analysis device 200 on the manufacturing company (beer manufacturer) via the communication line 160, for example.

It is possible to ascertain in every store the difference between the sales information in the sales information management system 250 and the actual consumption of the liquid 20, that is, the non-sale amount of the liquid 20 with the management server 300 and the analysis device 200 together with the time information.

It is possible to ascertain in every store the unit capacity error with the management server 300 and the analysis device 200, the unit capacity error corresponding to the difference between the sales unit capacity in one drinking container 40 and the actual flow rate of the liquid 20 actually dispensed into the drinking container 40, from the information on the unit capacity error between the sales unit capacity and the actual flow rate determined by the unit capacity error acquisition part 134 of the consumption analysis part 130 in the management server 300. Thus, for example, the manufacturing company (beer manufacturer) can provide guidance to each store such that the loss on the store side or the customer side is reduced.

In the dispensing device 50, when an automatic dispensing device that automatically pours the liquid 20 into the drinking container 40 is used, it is possible to find out whether or not the setting of the sales unit capacity is appropriate. When the unit capacity error is large and the setting of the sales unit capacity is inappropriate, it is possible to prompt the user to correct the setting.

It is possible to ascertain in every store the overtime consumption of the liquid 20 after the closing of the business determined by the overtime consumption acquisition part 136 with the management server 300 and the analysis device 200. That is, for example, the manufacturing company (beer manufacturer) can ascertain in every store whether or not the cleaning operation is performed whenever the business is closed by comparing the overtime consumption with the rough consumption of the liquid 20 involved in the cleaning operation.

Although it should not occur, when the store staff drinks secretly without anyone knowing it after the closing of the business, the overtime consumption greatly exceeds the normal amount of the liquid 20 involved in the cleaning operation. Thus, for example, the manufacturing company (beer manufacturer) can ascertain in every store whether or not the store staff drinks secretly without anyone knowing it by comparing the overtime consumption with the consumption of the liquid 20 involved in the cleaning operation.

As described above, in accordance with the liquid sales management system 101 according to the first embodiment, it is possible to reduce the non-sale amount of the liquid 20. Accordingly, it is possible to greatly contribute to the improvement of the profit of each store.

### Second Embodiment

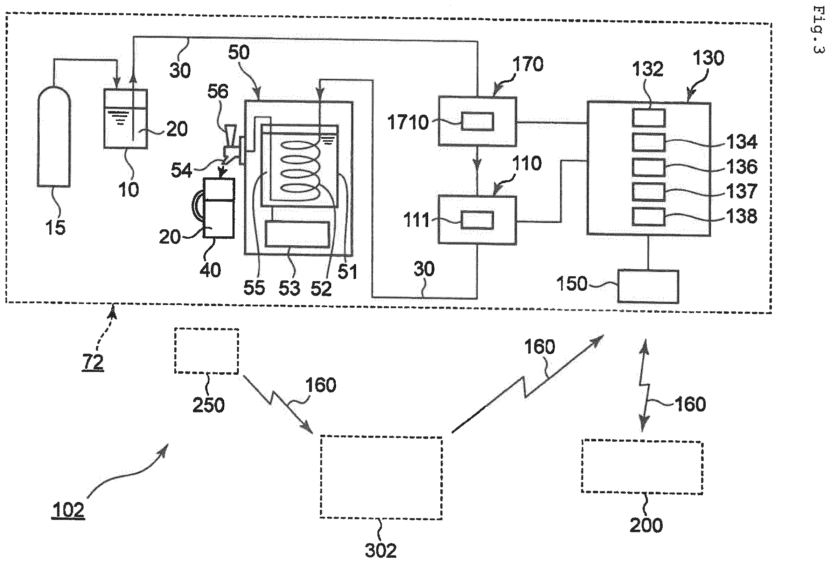

Next, a liquid sales management system 102 according to the second embodiment as illustrated in Fig. 3 will be described.

It has been described in the liquid sales management system 101 according to the first embodiment that the consumption analysis part 130 is provided in the management server 300. Meanwhile, in the liquid sales management system 102 according to the second embodiment, the following configuration is adopted: The consumption analysis part 130 is provided on the liquid supply system (referred to as a liquid supply system 72 in the second embodiment) side, and information determined by the consumption analysis part 130 is transmitted from the transmission and reception part 150 via the communication line 160 to, for example, the analysis device 200 on the manufacturing company (beer manufacturer). The management server is referred to as a management server 302 in the second embodiment.

The configuration and operation of the consumption analysis part 130 are the same as those in the case of the liquid sales management system 101 according to the first embodiment.

In the liquid supply system 72, the actual flow rate determination part 110 is electrically connected to the consumption analysis part 130, and the consumption analysis part 130 is electrically connected to the transmission and reception part 150.

Similarly to the management server 300, the sales information is supplied to the management server 302 from the sales information management system 250, and the management server 302 supplies the sales information to the consumption analysis part 130 via the communication line 160 and the transmission and reception part 150 in the liquid supply system 72. The transmission and reception part 150 in the liquid supply system 72 performs information communication with the analysis device 200 via the communication line 160.

Thus, the information determined by the consumption analysis part 130 can be supplied to the analysis device 200.

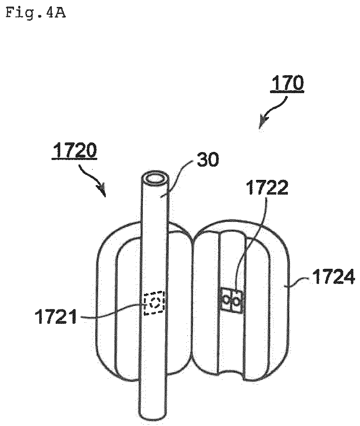

The liquid supply system 72 includes a fluid flow path adjustment device 170 as illustrated in Fig. 3. The fluid flow path adjustment device 170 will be described with reference to Figs. 4A to 4D.

The fluid flow path adjustment device 170 is a device as disclosed in, for example, JP 5649801 B, and is a device that is mounted with respect to the supply pipe 30, and prevents a carbon dioxide gas which is a pressurized gas from being ejected from the liquid dispensing outlet 54 of the dispensing device 50 when the liquid 20 within the container 10 is exhausted (when the storage container 10 is empty) while the liquid (beer) 20 is being dispensed from the liquid dispensing outlet 54 to the drinking container 40 and when the storage container 10 is replaced.

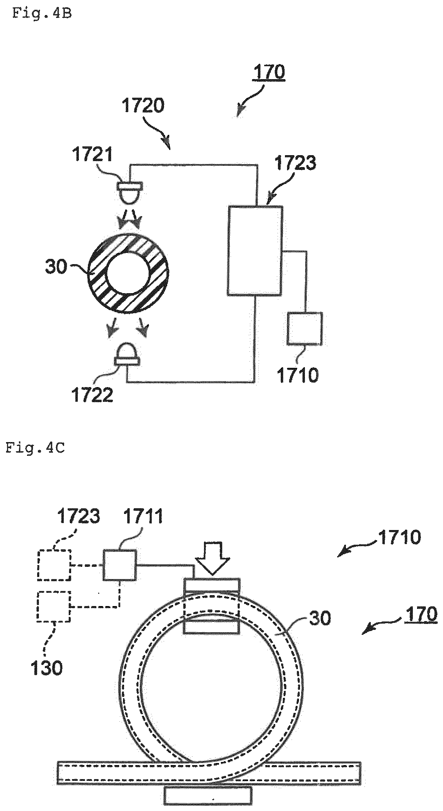

In order to prevent such ejection of the carbon dioxide gas, the fluid flow path adjustment device 170 includes a fluid stopper device 1710 and a detection part 1720. As illustrated in Figs. 4A and 4B, the detection part 1720 includes a light emitting element 1721, a light receiving element 1722, and a liquid state determination part 1723. The light emitting element 1721 and the light receiving element 1722 are positioned at a housing 1724 in the fluid flow path adjustment device 170, the housing being arranged so as to sandwich the resin supply pipe 30 within the fluid flow path adjustment device 170, and the elements being arranged to be opposed to each other across the beer passing through the supply pipe 30. The light emitting element 1721 emits infrared light, and the light receiving element 1722 receives the emitted infrared light. The light emitting element 1721 and the light receiving element 1722 are electrically connected to the liquid state determination part 1723 that detects the state of the passing liquid (beer) 20. That is, a refractive index of the light traveling from the light emitting element 1721 to the light receiving element 1722 varies depending on whether an object passing through the supply pipe 30 is a liquid, gas, or a mixture thereof. Therefore, the amount of light received by the light receiving element 1722 varies depending on the object passing through the supply pipe 30. The liquid state determination part 1723 detects a change in the amount of received light, and activates the fluid stopper device 1710 when the passing object becomes gas.

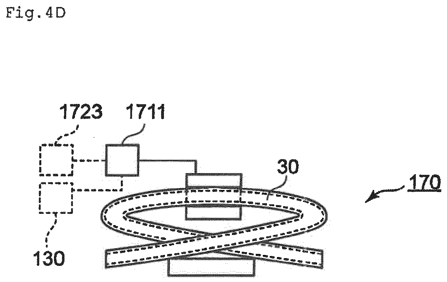

As illustrated in Figs. 4C and 4D, the fluid stopper device 1710 includes, as a configuration example, the supply pipe 30 arranged in a loop shape, and a movement mechanism 1711 for moving a holding part that holds the supply pipe 30. The movement mechanism 1711 moves the supply pipe 30 in an arrow direction with the control of the liquid state determination part 1723, and thus, a flow path is blocked by bending and crushing the supply pipe 30. The supply pipe 30 of which the flow path is blocked is returned by the movement mechanism 1711.

The fluid flow path adjustment device 170 having such a configuration and operation may be electrically connected to the consumption analysis part 130, and the fluid stopper device 1710 in the fluid flow path adjustment device 170 may be controlled by the consumption analysis part 130.

In the operation control using the consumption analysis part 130, the operation of the fluid stopper device 1710 may be controlled by the consumption analysis part 130 according to the information received by the transmission and reception part 150.

Since the cleaning operation in the liquid supply system 72 is performed with the fluid flow path adjustment device 170 turned off, the turning-off operation of the fluid flow path adjustment device 170 may be utilized as an indication of determining whether or not the cleaning operation is performed.

In the liquid sales management system 102 having such a configuration, the same effects as those in the case of the liquid sales management system 101 can be obtained.

That is, the consumption analysis part 130 in the liquid supply system 72 can perform the sales management of the liquid 20 by focusing on the difference between the apparent liquid amount supplied from the management server 302 via the communication line 160 and the actual consumption of the liquid 20 supplied from the actual flow rate determination part 110. Thus, the sales management of the liquid 20 can be performed in the analysis device 200 via the transmission and reception part 150 and the communication line 160.

The non-sale amount of the liquid 20 and the unit capacity error together with the time information can be ascertained for every store in the analysis device 200. Thus, guidance or the like to the store can be performed. It is possible to recognize whether or not the setting of the sales unit capacity is appropriate in the case of using the automatic dispensing device.

It is possible to ascertain in every store whether or not the cleaning operation is executed whenever the business is closed, and it is possible to ascertain in every store whether or not the store staff drinks secretly without anyone knowing it.

As described above, the liquid sales management system 102 according to the second embodiment can reduce the non-sale amount of the liquid 20. Accordingly, it is possible to greatly contribute to the improvement of the profit of each store.

The fluid flow path adjustment device 170 described in the second embodiment can be provided in the liquid supply system 70 in the liquid sales management system 101 according to the first embodiment. In this configuration, although it has been described in the first embodiment that the time information from the time information generation part 132 is used for determining whether or not the cleaning operation is performed, the turning-off operation in the fluid flow path adjustment device 170 can be used as an indication of determining whether or not the cleaning operation is performed, instead of or in combination with the time information.

It is also possible to adopt a configuration in which the configurations in the embodiments are combined.

In each embodiment, "electrically connected" means a concept that includes not only wired connection but also wireless connection.

### INDUSTRIAL APPLICABILITY

The present invention is applicable to a liquid sales management system that performs sales management of a liquid in a liquid supply system.

### DESCRIPTION OF REFERENCE SYMBOLS

- 10: STORAGE CONTAINER
- 30: SUPPLY PIPE
- 40: DRINKING CONTAINER
- 50: DISPENSING DEVICE
- 54: LIQUID DISPENSING OUTLET
- 70, 72: LIQUID SUPPLY SYSTEM
- 101, 102: LIQUID SALES MANAGEMENT SYSTEM
- 110: ACTUAL FLOW RATE DETERMINATION PART
- 111: FLOW RATE SENSOR
- 130: CONSUMPTION ANALYSIS PART
- 134: UNIT CAPACITY ERROR ACQUISITION PART
- 136: OVERTIME CONSUMPTION ACQUISITION PART
- 150: TRANSMISSION AND RECEPTION PART
- 160: COMMUNICATION LINE
- 170: FLUID FLOW PATH ADJUSTMENT DEVICE
- 171: FLUID STOPPER DEVICE
- 250: SALES INFORMATION MANAGEMENT SYSTEM
- 300, 302: MANAGEMENT SERVER

## Claims

1. A liquid sales management system (101) comprising a liquid supply system (70) configured to be installed in a store, a sales information management system (250) configured to be installed in the store, and a management server (300) configured to perform communication with the liquid supply system (70) and the sales information management system (250) via a communication line (160),
the liquid supply system (70) including:
a dispensing device (50) configured such that a liquid within a storage container (10) is supplied with pressurization through a supply pipe (30), configured to cool and dispense the liquid to a drinking container (40);
an actual flow rate determination part (110) having a flow rate sensor (111) for detecting an amount of the liquid dispensed into the drinking container (40) and configured to determine an actual flow rate of the liquid dispensed into the drinking container (40) from the dispensing device (50) based on a detection signal of the flow rate sensor (111); and
a transmission and reception part (150) configured to communicate with the communication line (160),
the sales information management system (250) being configured to send sales information of the liquid to the communication line (160), the sales information being information with which pieces of information of a sales unit volume corresponding to a prescribed volume per one sale, the number of sales, and a sales time are associated, and
the management server (300) including a consumption analysis part (130) configured to determine a difference between an apparent liquid amount determined from the sales information and the actual flow rate, the difference corresponding to a non-sales amount of the liquid which is not involved in sales,
**characterized in that** the management server (300) further includes an overtime consumption acquisition part (136) configured to determine an amount of liquid from the storage container (10) consumed after the sales time is ended, as an overtime consumption.

2. The liquid sales management system (101) according to claim 1,
wherein the overtime consumption acquisition part (136) is configured to subtract a known consumption of the liquid consumed by one cleaning operation for the liquid supply system (70) from the overtime consumption.

3. The liquid sales management system (101) according to claim 1 or 2,
wherein the management server (300) further includes a unit capacity error acquisition part (134) configured to determine a difference between the sales unit volume and the actual flow rate, as a unit capacity error.

4. The liquid sales management system (101) according to any one of claims 1 to 3, further comprising:
an analysis device (200) configured to be provided in a liquid manufacturer and to communicate with the communication line (160) for performing sales management of the liquid (20).

5. A liquid sales management system (102) comprising a liquid supply system (72) configured to be installed in a store, a sales information management system (250) configured to be installed in the store, and a management server (302) configured to perform communication via a communication line (160) and to store information from the liquid supply system (72) and the sales information management system (250),
the sales information management system (250) being configured to send sales information of the liquid to the communication line (160), the sales information being information with which pieces of information of a sales unit volume corresponding to a prescribed volume per one sale, the number of sales, and a sales time are associated,
the liquid supply system (72) including:
a dispensing device (50) configured such that a liquid within a storage container (10) is supplied with pressurization through a supply pipe (30), configured to cool and dispense the liquid to a drinking container (40);
an actual flow rate determination part (110) having a flow rate sensor (111) for detecting an amount of the liquid dispensed into the drinking container (40) and configured to determine an actual flow rate of the liquid dispensed into the drinking container (40) from the dispensing device (50) based on a detection signal of the flow rate sensor (111);
a transmission and reception part (150) configured to communicate with the communication line (160), and
a consumption analysis part (130) configured to determine a difference between an apparent liquid amount determined from the sales information obtained from the management server (302) and the actual flow rate, the difference corresponding to a non-sales amount of the liquid which is not involved in sales,
**characterized in that** the liquid supply system (72) further includes an overtime consumption acquisition part (136) configured to determine an amount of liquid from the storage container (10) consumed after the sales time is ended, as an overtime consumption.

6. The liquid sales management system (102) according to claim 5, further comprising:
an analysis device (200) configured to be provided in a liquid manufacturer and to communicate with the communication line (160) for performing sales management of the liquid (20).

7. The liquid sales management system (101, 102) according to any one of claims 1 to 6,
wherein the liquid supply system (70, 72) further includes a fluid flow path adjustment device (170) configured to be mounted with respect to the supply pipe (30) and including a fluid stopper device (1710) configured to stop the dispensing of the liquid from the dispensing device (50).

## Patentansprüche

1. Flüssigkeitsverkaufsverwaltungssystem (101), umfassend ein Flüssigkeitszuführungssystem (70), welches eingerichtet ist, in einem Laden installiert zu werden, ein Verkaufsinformationsverwaltungssystem (250), welches eingerichtet ist, in dem Laden installiert zu werden, und einen Managementserver (300), welcher eingerichtet ist, Kommunikation mit dem Flüssigkeitszuführungssystem (70) und dem Verkaufsinformationsverwaltungssystem (250) über eine Kommunikationsleitung (160) durchzuführen, wobei das Flüssigkeitszuführungssystem (70) einschließt:
eine Abgabevorrichtung (50), welche derart eingerichtet ist, dass eine Flüssigkeit innerhalb eines Aufbewahrungsbehälters (10) mit Druckbeaufschlagung durch ein Zuführungsrohr (30) zugeführt wird, welche eingerichtet ist, die Flüssigkeit zu kühlen und an einen Trinkbehälter (40) abzugeben;
einen tatsächliche Strömungsratebestimmungsteil (110), welcher einen Strömungsratensensor (111) zum Nachweis einer Menge der in den Trinkbehälter (40) abgegebenen Flüssigkeit aufweist und eingerichtet ist, eine tatsächliche Strömungsrate der aus der Abgabevorrichtung (50) in den Trinkbehälter (40) abgegebenen Flüssigkeit auf Basis eines Nachweissignals des Strömungsratensensors (111) zu bestimmen; und
einen Übermittlungs- und Empfangsteil (150), welcher eingerichtet ist, mit der Kommunikationsleitung (160) zu kommunizieren,
wobei das Verkaufsinformationsverwaltungssystem (250) eingerichtet ist, Verkaufsinformationen der Flüssigkeit an die Kommunikationsleitung (160) zu senden, die Verkaufsinformationen Informationen sind, mit denen Informationen eines Verkaufseinheitsvolumens, welches einem vorgeschriebenen Volumen pro Verkauf entspricht, die Anzahl von Verkäufen und ein Verkaufszeitpunkt im Zusammenhang stehen, und
wobei der Verwaltungsserver (300) einen Verkaufsanalyseteil (130), welcher eingerichtet ist, einen Unterschied zwischen einer scheinbaren Menge der Flüssigkeit, bestimmt anhand der Verkaufsinformationen, und der tatsächlichen Strömungsrate zu bestimmen, wobei der Unterschied einer Nichtverkaufsmenge der Flüssigkeit, welche nicht an Verkäufen beteiligt ist, entspricht, einschließt,
**dadurch gekennzeichnet, dass** der Verwaltungsserver (300) weiter einen Überstundenverbrauchserfassungsteil (136), welcher eingerichtet ist, eine Menge der Flüssigkeit aus dem Aufbewahrungsbehälter (10), verbraucht nach Beendigung der Verkaufszeit, als einen Überstundenverbrauch zu bestimmen, einschließt.

2. Flüssigkeitsverkaufsverwaltungssystem (101) nach Anspruch 1,
wobei der Überstundenverbrauchserfassungsteil (136) eingerichtet ist, einen bekannten Verbrauch der Flüssigkeit, verbraucht durch einen Reinigungsvorgang für das Flüssigkeitszuführungssystem (70), von dem Überstundenverbrauch abzuziehen.

3. Flüssigkeitsverkaufsverwaltungssystem (101) nach Anspruch 1 oder 2,
wobei der Verwaltungsserver (300) weiter einen Einheitskapazitätsfehlererfassungsteil (134), welcher eingerichtet ist, einen Unterschied zwischen dem Verkaufseinheitsvolumen und der tatsächlichen Strömungsrate als einen Einheitskapazitätsfehler zu bestimmen, einschließt.

4. Flüssigkeitsverkaufsverwaltungssystem (101) nach einem der Ansprüche 1 bis 3, weiter umfassend:
eine Analysevorrichtung (200), welche eingerichtet ist, in einem Flüssigkeitshersteller vorgesehen zu sein und mit der Kommunikationsleitung (160) zur Durchführung von Verkaufsverwaltung der Flüssigkeit (20) zu kommunizieren.

5. Flüssigkeitsverkaufsverwaltungssystem (102), umfassend ein Flüssigkeitszuführungssystem (72), welches eingerichtet ist, in einem Laden installiert zu werden, ein Verkaufsinformationsverwaltungssystem (250), welches eingerichtet ist, in dem Laden installiert zu werden, und einen Verwaltungsserver (302), welcher eingerichtet ist, Kommunikation über eine Kommunikationsleitung (160) durchzuführen und Informationen von dem Flüssigkeitszuführungssystem (72) und dem Verkaufsinformationsverwaltungssystem (250) zu speichern,
wobei das Verkaufsinformationsverwaltungssystem (250) eingerichtet ist, Verkaufsinformationen der Flüssigkeit an die Kommunikationsleitung (160) zu senden, die Verkaufsinformationen Informationen sind, mit denen Informationen eines Verkaufseinheitsvolumens, welches einem vorgeschriebenen Volumen pro Verkauf entspricht, die Anzahl von Verkäufen und ein Verkaufszeitpunkt im Zusammenhang stehen,
wobei das Flüssigkeitszuführungssystem (72) einschließt:
eine Abgabevorrichtung (50), welche derart eingerichtet ist, dass eine Flüssigkeit innerhalb eines Aufbewahrungsbehälters (10) mit Druckbeaufschlagung durch ein Zuführungsrohr (30) zugeführt wird, welche eingerichtet ist, die Flüssigkeit zu kühlen und an einen Trinkbehälter (40) abzugeben;
einen tatsächliche Strömungsratebestimmungsteil (110), welcher einen Strömungsratensensor (111) zum Nachweis einer Menge der in den Trinkbehälter (40) abgegebenen Flüssigkeit aufweist und eingerichtet ist, eine tatsächliche Strömungsrate der aus der Abgabevorrichtung (50) in den Trinkbehälter (40) abgegebenen Flüssigkeit auf Basis eines Nachweissignals des Strömungsratensensors (111) zu bestimmen;
einen Übermittlungs- und Empfangsteil (150), welcher eingerichtet ist, mit der Kommunikationsleitung (160) zu kommunizieren, und
einen Verbrauchsanalyseteil (130), welcher eingerichtet ist, einen Unterschied zwischen einer scheinbaren Menge der Flüssigkeit, bestimmt anhand der Verkaufsinformationen, welche von dem Verwaltungsserver (302) erhalten werden, und der tatsächlichen Strömungsrate zu bestimmen, wobei der Unterschied einer Nichtverkaufsmenge der Flüssigkeit, welche nicht an Verkäufen beteiligt ist, entspricht,
**dadurch gekennzeichnet, dass** das Flüssigkeitszuführungssystem (72) weiter einen Überstundenverbrauchserfassungsteil (136), welcher eingerichtet ist, eine Menge der Flüssigkeit aus dem Aufbewahrungsbehälter (10), verbraucht nach Beendigung der Verkaufszeit, als einen Überstundenverbrauch zu bestimmen, einschließt.

6. Flüssigkeitsverkaufsverwaltungssystem (102) nach Anspruch 5, weiter umfassend:
eine Analysevorrichtung (200), welche eingerichtet ist, in einem Flüssigkeitshersteller vorgesehen zu sein und mit der Kommunikationsleitung (160) zur Durchführung von Verkaufsverwaltung der Flüssigkeit (20) zu kommunizieren.

7. Flüssigkeitsverkaufsverwaltungssystem (101, 102) nach einem der Ansprüche 1 bis 6,
wobei das Flüssigkeitszuführungssystem (70, 72) weiter eine Flüssigkeitsströmungswegeinstellungsvorrichtung (170), welche eingerichtet ist, in Bezug auf das Zuführungsrohr (30) angebracht zu werden, einschließend eine Flüssigkeitsstoppvorrichtung (1710), welche eingerichtet ist, die Abgabe der Flüssigkeit aus der Abgabevorrichtung (50) zu stoppen, einschließt.

## Revendications

1. Système de gestion de ventes de liquide (101) comprenant un système d'alimentation en liquide (70) configuré pour être installé dans un magasin, un système de gestion d'informations de ventes (250) configuré pour être installé dans le magasin et un serveur de gestion (300) configuré pour réaliser la communication avec le système d'alimentation en liquide (70) et le système de gestion d'informations de ventes (250) par le biais d'une ligne de communication (160), le système d'alimentation en liquide (70) incluant :
un dispositif de distribution (50) configuré de sorte qu'un liquide au sein d'un récipient de stockage (10) est alimenté avec de la pressurisation à travers un tuyau d'alimentation (30), configuré pour refroidir et distribuer le liquide à un récipient de boisson (40) ;
une partie de détermination de débit réel (110) ayant un débitmètre (111) pour détecter une quantité du liquide distribué dans le récipient de boisson (40) et configurée pour déterminer un débit réel du liquide distribué dans le récipient de boisson (40) depuis le dispositif de distribution (50) en fonction d'un signal de détection du débitmètre (111) ; et
une partie de transmission et réception (150) configurée pour communiquer avec la ligne de communication (160),
le système de gestion d'informations de ventes (250) étant configuré pour envoyer des informations de ventes du liquide à la ligne de communication (160), les informations de ventes étant des informations avec lesquelles des éléments d'information d'un volume unitaire de ventes correspondant à un volume prescrit pour une vente, du nombre de ventes et d'une heure de ventes sont associés, et
le serveur de gestion (300) incluant une partie d'analyse de consommation (130) configurée pour déterminer une différence entre une quantité de liquide apparente déterminée à partir des informations de ventes et le débit réel, la différence correspondant à une quantité de non ventes du liquide qui n'est pas impliquée dans les ventes,
**caractérisé en ce que** le serveur de gestion (300) inclut en outre une partie d'acquisition de consommation d'heures supplémentaires (136) configurée pour déterminer une quantité de liquide provenant du récipient de stockage (10) consommée après que l'heure de ventes est terminée en tant que consommation d'heures supplémentaires.

2. Système de gestion de ventes de liquide (101) selon la revendication 1,
dans lequel la partie d'acquisition de consommation d'heures supplémentaires (136) est configurée pour soustraire une consommation connue du liquide consommé par une opération de nettoyage pour le système d'alimentation en liquide (70) de la consommation d'heures supplémentaires.

3. Système de gestion de ventes de liquide (101) selon la revendication 1 ou 2,
dans lequel le serveur de gestion (300) inclut en outre une partie d'acquisition d'erreur de capacité unitaire (134) configurée pour déterminer une différence entre le volume unitaire de ventes et le débit réel en tant qu'erreur de capacité unitaire.

4. Système de gestion de ventes de liquide (101) selon l'une quelconque des revendications 1 à 3, comprenant en outre :
un dispositif d'analyse (200) configuré pour être fourni dans un fabriquant de liquide et pour communiquer avec la ligne de communication (160) pour réaliser la gestion de ventes du liquide (20).

5. Système de gestion de ventes de liquide (102) comprenant un système d'alimentation en liquide (72) configuré pour être installé dans un magasin, un système de gestion d'informations de ventes (250) configuré pour être installé dans le magasin et un serveur de gestion (302) configuré pour réaliser la communication par le biais d'une ligne de communication (160) et pour stocker des informations provenant du système d'alimentation en liquide (72) et du système de gestion d'informations de ventes (250),
le système de gestion d'informations de ventes (250) étant configuré pour envoyer des informations de ventes du liquide à la ligne de communication (160), les informations de ventes étant des informations avec lesquelles des éléments d'information d'un volume unitaire de ventes correspondant à un volume prescrit pour une vente, du nombre de ventes et d'une heure de ventes sont associés,
le système d'alimentation en liquide (72) incluant :
un dispositif de distribution (50) configuré de sorte qu'un liquide au sein d'un récipient de stockage (10) est alimenté avec de la pressurisation à travers un tuyau d'alimentation (30), configuré pour refroidir et distribuer le liquide à un récipient de boisson (40) ;
une partie de détermination de débit réel (110) ayant un débitmètre (111) pour détecter une quantité du liquide distribué dans le récipient de boisson (40) et configurée pour déterminer un débit réel du liquide distribué dans le récipient de boisson (40) depuis le dispositif de distribution (50) en fonction d'un signal de détection du débitmètre (111) ;
une partie de transmission et réception (150) configurée pour communiquer avec la ligne de communication (160), et
une partie d'analyse de consommation (130) configurée pour déterminer une différence entre une quantité de liquide apparente déterminée à partir des informations de ventes obtenues du serveur de gestion (302) et le débit réel, la différence correspondant à une quantité de non ventes du liquide qui n'est pas impliquée dans les ventes,
**caractérisé en ce que** le système d'alimentation en liquide (72) inclut en outre une partie d'acquisition de consommation d'heures supplémentaires (136) configurée pour déterminer une quantité de liquide provenant du récipient de stockage (10) consommée après que l'heure de ventes est terminée en tant que consommation d'heures supplémentaires.

6. Système de gestion de ventes de liquide (102) selon la revendication 5, comprenant en outre :
un dispositif d'analyse (200) configuré pour être fourni dans un fabriquant de liquide et pour communiquer avec la ligne de communication (160) pour réaliser la gestion de ventes du liquide (20).

7. Système de gestion de ventes de liquide (101, 102) selon l'une quelconque des revendications 1 à 6,
dans lequel le système d'alimentation en liquide (70, 72) inclut en outre un dispositif d'ajustement de trajet d'écoulement fluidique (170) configuré pour être monté par rapport au tuyau d'alimentation (30) et incluant un dispositif d'arrêt de fluide (1710) configuré pour arrêter la distribution du liquide à partir du dispositif de distribution (50).
